# FASCICULE DE BREVET EUROPEEN

(11) **EP 3 467 227 B1**
(45) Date de publication et mention de la délivrance du brevet: **29.04.2020**
(21) Numéro de dépôt: 18306298.3
(22) Date de dépôt: 02.10.2018
(51) Int. Cl.: E04D 3/35, B32B 9/04, E04C 2/16, E04C 2/296

(54) **DISPOSITIF DE TOITURE ISOLÉE THERMIQUEMENT**
WÄRMEISOLIERTE BEDACHUNGSVORRICHTUNG
THERMALLY INSULATED ROOF DEVICE

(30) Priorité: 04.10.2017 FR 1759299
(43) Date de publication de la demande: 10.04.2019
(73) Titulaire: SOPREMA (SAS), 67100 Strasbourg (FR)
(72) Inventeur: BINDSCHEDLER, Pierre-Etienne, 67000 Strasbourg (DE); BOUCHER, Jérémie, 88000 EPINAL (FR); PERRIN, Rémi, 67530 BOERSCH (FR)
(74) Mandataire: Cabinet Nuss

(56) Documents cités:
- WO-A2-2012/147040
- FR-A1- 2 308 748
- Isonat: "Guide de mise en oeuvre - isolants rigides", , 5 décembre 2011 (2011-12-05), pages 1-12, XP055480456, Extrait de l'Internet: URL:http://www.isonat.com/uploads/files/gu ides/GuidePose_Rigide_Toiture_BDEF.pdf [extrait le 2018-06-01]

## Description

La présente invention concerne le domaine des toitures-terrasses, c'est-à-dire généralement une toiture sensiblement plane à un seul pan avec une pente de moins de 10 %, préférentiellement de moins de 5 %, mais également les toitures en pente, et plus particulièrement celles réalisées sur un support en bois et intégrant une part importante, voire majoritaire, de matériaux biosourcés.

L'invention vise plus spécifiquement un dispositif de toiture isolée thermiquement, et préférentiellement également phoniquement, à structure compacte.

Actuellement, on connaît déjà des constructions de toiture-terrasse ou de toitures en pente, à base de matériaux essentiellement biosourcés, qui comprennent un support surfacique constitué de panneaux à base de particules et/ou de copeaux de bois aggloméré(e)s, sur lequel sont disposées, successivement et de manière stratifiée, i) au moins une première couche formant une barrière régulant le passage de la vapeur d'eau (appelée communément pare-vapeur), ii) au moins une seconde couche isolante constituée au moins partiellement d'un matériau à base de fibres de bois et iii) au moins une troisième couche sensiblement imperméable à l'eau liquide.

Cette troisième couche peut présenter une résistance à la diffusion de la vapeur d'eau qui peut être plus ou moins élevée (Sd > 200 m pour les membranes bitumineuses et Sd > 25 m pour les membranes synthétiques).

Dans ces constructions connues, la seconde couche isolante est entièrement composée de fibres de bois (en une ou plusieurs couches), qui forment un matériau perméable à la vapeur d'eau (µ = 3) et hygroscopique, mais putrescible : dégradation possible du matériau et de ses propriétés en cas de développement fongique. Un tel développement néfaste peut se produire lorsque l'humidité relative et la température sont élevées (par exemple : HR > 85 % associé à T > 12° C pendant une période d'incubation prolongée) au niveau de l'isolant. Or, ces conditions seuils de température et d'humidité relative sont parfois atteintes au niveau de la couche externe de l'isolant, en particulier dans les régions tempérées.

L'humidité relative est définie comme le rapport de la teneur en eau de l'air sur la teneur en eau maximale de ce même air, et cette teneur en eau maximale est dépendante de la température, un air chaud pouvant contenir plus d'eau sous forme vapeur qu'un air froid. Etant donné que la couche de fibres de bois est employée comme isolant thermique, elle constitue justement la couche de matériau au sein de laquelle va se former le gradient de température entre le milieu intérieur et le milieu extérieur.

Ainsi, notamment en saison de basses températures et en présence de locaux chauffés, on comprend que la température dans la couche isolante sera nettement plus élevée au niveau de la face interne de cette couche (proche du milieu intérieur), qu'au niveau de sa face externe (proche du milieu extérieur) : l'humidité relative de l'air entre les fibres du côté externe sera donc nettement plus élevée que du côté interne (pour un même nombre de molécules d'eau présentes au m³), pouvant même aboutir, en fonction des circonstances, à un phénomène de condensation au sein de la couche isolante.

L'exposition aux risques de dégradation par développement fongique (lorsque les conditions de température sont adéquates) est donc importante dans le contexte précité, ce que les inventeurs ont pu corroborer par des expérimentations et des simulations.

Le problème général posé à la présente invention consiste par conséquent, dans le contexte des dispositifs de toiture défini ci-dessus, à proposer une solution permettant de réduire notablement, voire de supprimer, le risque de développement fongique, tout en conservant une performance d'isolation et une compacité au moins équivalentes aux constructions actuelles, ainsi qu'avantageusement une origine au moins partiellement, et préférentiellement majoritairement voire totalement, biosourcée des matériaux isolants, préférentiellement sans augmentation de poids.

Par le document « Isonat : Guide de mise en œuvre - isolants rigides » de la société Buitex Industries, on connaît un dispositif de toiture en pente sensiblement selon le préambule de la revendication 1, c'est-à-dire comprenant un support surfacique ou platelage, pouvant éventuellement être constitué de panneaux à base de particules et/ou de copeaux de bois aggloméré(e)s, sur lequel sont disposées, successivement et de manière stratifiée, au moins une première couche formant une barrière régulant le passage de la vapeur d'eau, au moins une seconde couche isolante constituée au moins partiellement d'un matériau à base de fibres de bois et au moins une troisième couche sensiblement imperméable à l'eau liquide, la seconde couche isolante étant une couche composite formée par la superposition de deux couches élémentaires homogènes distinctes, à savoir, une couche élémentaire inférieure en un matériau à base de fibres de bois, reposant sur la première couche, et une couche élémentaire supérieure, sur laquelle repose la troisième couche.

Dans ce dispositif connu, l'étanchéité à l'eau est obtenue essentiellement par la mise en œuvre d'une couverture de toit mécanique, c'est-à-dire formée d'un assemblage d'éléments individuels (tuiles, ardoises, ...), reposant sur un lattage spécifique et à laquelle est associée, en-dessous, une membrane d'écran de sous-toiture pour les passages d'eau accidentels, formant la troisième couche précitée.

La mise en œuvre d'une membrane de sous-toiture avec une grande perméabilité à la vapeur d'eau et l'existence d'une lame d'air ventilée entre la couverture mécanique et cette membrane permet une bonne évacuation de l'humidité éventuellement présente dans la couche isolante.

Toutefois, il en résulte une construction complexe, encombrante, lourde et onéreuse, et qui n'est pas adaptée aux toitures-terrasses avec des pentes généralement inférieures à 5 %.

L'invention vise à fournir une solution permettant de s'affranchir des limitations et inconvénients d'une telle construction, tout en résolvant le problème général exposé précédemment.

Ce but est atteint par un dispositif de toiture-terrasse ou de toiture en pente selon le préambule de la revendication 1, présentant simultanément et en combinaison les caractéristiques de la partie caractérisante de cette revendication.

L'invention sera mieux comprise grâce à la description ci-après, qui se rapporte à des modes de réalisation préférés, donnés à titre d'exemple non limitatif, et expliqués avec référence aux dessins schématiques annexés, dans lesquels :
la figure 1 est une vue partielle en coupe d'un dispositif de toiture-terrasse selon un premier mode de réalisation de l'invention, et,
la figure 2 est une vue similaire à celle de la figure 1 d'un second mode de réalisation de l'invention.

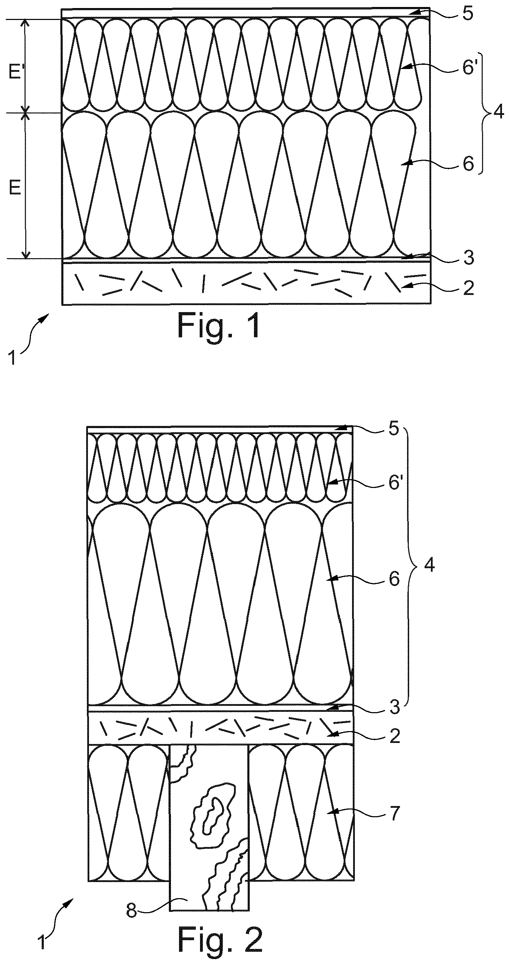

Les figures 1 et 2 illustrent schématiquement et à titre d'exemples, un dispositif 1 de toiture, ici une toiture-terrasse, isolée thermiquement et à structure compacte, comprenant un support surfacique 2 constitué de panneaux à base de particules et/ou de copeaux de bois aggloméré(e)s, sur lequel sont disposées, successivement et de manière stratifiée (de l'intérieur vers l'extérieur ou de bas en haut sur les figures 1 et 2), au moins une première couche 3 formant barrière régulant le passage de la vapeur d'eau, au moins une seconde couche isolante 4 constituée au moins partiellement d'un matériau à base de fibres de bois et au moins une troisième couche 5 sensiblement imperméable à l'eau liquide.

Préférentiellement, cette troisième couche 5 présente également une excellente résistance aux agents climatiques et à la pollution.

La seconde couche isolante 4 est une couche composite formée par la superposition de deux couches élémentaires homogènes distinctes 6 et 6', à savoir, une couche élémentaire inférieure 6 en un matériau à base de fibres de bois, reposant sur la première couche 3, et une couche élémentaire supérieure 6', sur laquelle repose la troisième couche 5.

Conformément à l'invention, la troisième couche 5, formant la couche supérieure et extérieure du dispositif 1, consiste en une membrane d'étanchéité, soit bitumineuse, soit synthétique, et la couche élémentaire supérieure 6' est formée d'un matériau au moins partiellement biosourcé, à propriétés hygroscopiques, antifongiques et d'isolation thermique, présentant une faible résistance à la diffusion de la vapeur d'eau et choisi dans le groupe formé par le liège expansé, la perlite expansée et la laine de bois. De plus, le ratio [couche supérieure 6' / couche inférieure 6], en termes de rapport de leurs épaisseurs E' / E ou de leurs résistances thermiques R' / R respectives, est compris entre 0,25 et 0,6, et la première couche 3 consiste en une membrane formant une barrière à la vapeur hygrovariable.

La mise en œuvre d'une couche d'étanchéité comme troisième couche supérieure 5 directement exposée aux agents climatiques et aux intempéries, permet d'aboutir à un dispositif avec un nombre limité de couches superposées, de toiture 1 qui est compacte, légère et relativement économique, utilisable pour une toiture en pente ou en terrasse.

La mise en œuvre d'un pare-vapeur hygrovariable 3 du côté intérieur du dispositif 1 (côté chaud de l'enveloppe stratifiée) permet de rediffuser la vapeur d'eau vers l'intérieur, pour une couche inférieure 6 de matériau isolant et autorise ainsi la mise en œuvre pour cette couche d'un matériau à base de fibres de bois, non spécifiquement traité pour résister à l'humidité et à ses conséquences.

Toutefois, la couche d'isolant supérieure 6', située directement sous la couche d'étanchéité 5, laquelle assure un rôle de peau extérieure de la toiture avec une très faible perméabilité à la vapeur d'eau, ne peut profiter que marginalement, voire pas du tout, des propriétés de la membrane 3 hygrovariable (trop éloignée) et se retrouve de plus du côté froid de l'enveloppe stratifiée du dispositif de toiture 3. Cette configuration peut aboutir à un taux d'humidité résident élevé dans cette couche 6', voire même à une condensation d'eau liquide, qui est problématique, surtout en période hivernale et dans les zones tempérées et arctiques.

En proposant une constitution bicomposante de la couche isolante 4, l'invention permet d'éloigner le matériau en fibres de bois (naturel mais putrescible) de la face externe (surface supérieure de la couche 5) du revêtement stratifié 3 + 4 + 5, et en sélectionnant un matériau aux caractéristiques techniques spécifiques précitées pour la couche 6', l'invention tire avantage de ses multiples propriétés bénéfiques dans le contexte d'application visé, à savoir :
- faculté d'isolation thermique validée en matière de construction, préférentiellement au moins équivalente à celle des matériaux à base de fibres de bois ;
- résistance au développement fongique ;
- faible résistance à la diffusion de la vapeur d'eau ;
- capacité de reprise de charge hygroscopique (rétention d'une partie de l'humidité présente entre les première et troisième couches 3 et 5).

De plus, le matériau de la couche élémentaire 6' est au moins partiellement d'origine végétale, et préférentiellement totalement biosourcée (à base de matière première ou recyclée).

Par la sélection spécifique ciblée de la nature du matériau et de son taux de présence (épaisseur/résistance thermique), la couche 6' constitue un écran hygrothermique, isolant et résistant au développement fongique, avec une bonne capacité de sorption hygroscopique et présentant une bonne perméabilité à la vapeur d'eau.

La combinaison précitée de caractéristiques de matériaux constitutifs, de configuration et d'arrangement des couches du dispositif permet ainsi de résoudre le problème posé et de surmonter les inconvénients précités.

Les couches 6 et 6' sont fondamentalement de nature rigide, au moins autoportantes, et peuvent préférentiellement supporter une charge, dépendant de la nature de la toiture (en pente, terrasse accessible, marchable ou non).

Les couches élémentaires inférieure 6 et supérieure 6' sont préférentiellement formées chacune de panneaux en matériau biosourcé correspondant, éventuellement superposés.

Avantageusement, et en fonction du mode de réalisation de la couche 6', les panneaux de laine de bois liée avec un liant hydraulique sont conformes à la norme EN 13168 (µ = 5), les panneaux de perlite expansée sont conformes à la norme EN 13169 (µ = 5) et les panneaux de liège expansé sont conformes à la norme EN 13170.

De même, les panneaux de fibres de bois, formant la couche élémentaire inférieure 6, sont avantageusement conformes à la norme EN 13171.

A l'instar de la perlite, le liège expansé, issu du chêne-liège (expansion sous l'effet de la vapeur d'eau), est naturellement imputrescible, du fait de sa teneur en tanins et en subérine. Il en est de même de la laine de bois.

Les inventeurs ont pu constater, après une pluralité de tests, qu'un ratio de 0,25 constituait le seuil inférieur à partir duquel il est possible de prévenir sensiblement tout risque de développement fongique (dans le stratifié, et notamment la couche 6), au moins dans les régions à climat méditerranéen, voire tempéré. En outre, au-delà d'un ratio de 0,6, le coût économique et les besoins en ressource à long terme ont été jugés non supportables dans un contexte d'exploitations industrielle et commerciale.

Les panneaux formant le support 2 peuvent par exemple être du type connu sous la désignation OSB ("Oriented Strand Board" : panneau en couches sous forme de lamelles de bois, liées ensemble par une résine).

Chacune des couches élémentaires 6 et 6' peut bien entendu être elle-même formée par une superposition de plusieurs sous-couches ou panneaux du matériau considéré.

Par faible résistance à la diffusion de la vapeur d'eau, on entend dans la présente, en relation avec la couche élémentaire supérieure 6', une valeur de la résistance Sd inférieure à 20 m, avantageusement inférieure à 1,5 m, préférentiellement inférieure à 1,2 m.

Bien entendu, les épaisseurs E' et E des deux types d'isolants à employer dépendent de la résistance thermique totale recherchée, mais il devrait avantageusement toujours y avoir au minimum un quart de ladite résistance thermique (du complexe composite 6 + 6') fourni par le liège expansé, la perlite expansée ou la laine de bois.

En accord avec une première variante de réalisation optimisée, issue des analyses et expériences effectuées par les inventeurs et permettant à l'invention de fournir les propriétés avantageuses précitées dans une plus grande amplitude de conditions climatiques et avec une optimisation du coût de revient (maximisation de l'utilisation de la fibre de bois sous étanchéité membranaire), il est préféré que le rapport R' / R des résistances thermiques R' et R des couches élémentaires respectivement supérieure 6' et inférieure 6 soit compris entre environ 1/3 et environ 1/2.

En accord avec une seconde variante de réalisation optimisée, aboutissant également aux avantages précités, il peut aussi être prévu que le rapport E' / E des épaisseurs E' et E des couches élémentaires respectivement supérieure 6' et inférieure 6 est compris entre environ 1/3 et environ 1/2, lorsque la couche élémentaire supérieure 6' est à base de liège expansé.

Le liège expansé possédant une conductivité thermique environ équivalente aux isolants à base de fibres de bois (λ = 0,04 W/m/K), il en résulte une non augmentation de l'épaisseur de la deuxième couche isolante 4 à performance thermique égale.

L'exploitation d'une carte des conditions climatiques régionales permet à l'homme du métier de déterminer la valeur minimale nécessaire de l'épaisseur E' de la couche élémentaire supérieure 6' et d'adapter au mieux les ratios précités.

En vue de conférer au revêtement stratifié une rigidité importante et notamment une résistance élevée à la compression, permettant le cas échéant de rendre la toiture-terrasse concernée "accessible", la couche élémentaire inférieure 6 à base de fibres de bois présente favorablement une densité d'au moins 100 kg/m³, préférentiellement d'au moins 150 kg/m³ et une épaisseur d'au moins 60 mm, préférentiellement d'au moins 80 mm.

Conformément à un mode de réalisation avantageux, présentant une isolation thermique augmentée, sans augmentation de la couche isolante 4 située au-dessus du support surfacique 2, ledit dispositif 1 peut comprendre au moins une couche 7 d'isolation thermique additionnelle rapportée sous la face interne ou inférieure du support surfacique 2, opposée à sa face portant le revêtement stratifié formé par les première, deuxième et troisième couches 3, 4, 5. Avantageusement, cette couche isolante additionnelle 7 présente, en climat de plaine à une altitude inférieure à 600 m, une résistance thermique sensiblement équivalente à la moitié de la résistance thermique de la seconde couche isolante composite 4 et est préférentiellement constituée entièrement d'un matériau à base de fibres de bois. En climat froid, pour une altitude comprise entre 600 m et 900 m, cette couche isolante additionnelle 7 présente une résistance thermique sensiblement équivalente au tiers de la résistance thermique de la seconde couche isolante composite 4 et est toujours préférentiellement constituée entièrement d'un matériau à base de fibres de bois.

En accord avec une réalisation majoritairement ou entièrement à base de matériaux biosourcés du dispositif 1, ce dernier peut comprendre avantageusement une ossature bois 8 portant les panneaux formant le support surfacique 2 (voir figure 2).

Selon une caractéristique avantageuse possible de l'invention, la membrane de la première couche 3 forme non seulement une barrière à la vapeur hygrovariable, mais également une barrière sensiblement étanche à l'air.

L'hygrovariabilité de la membrane 3 est définie de sorte que la valeur Sd (résistance à la diffusion de la vapeur d'eau) est toujours située entre 0,35 m et 90 m. Préférentiellement pour l'application envisagée, la valeur Sd de la membrane 3 peut varier de 0,5 m à 60 m selon les variantes, conditions et régions de mise en œuvre.

La troisième couche 5 formant le revêtement supérieur de la toiture peut consister en une membrane d'étanchéité synthétique, en polychlorure de vinyle (PVC) ou en polyoléfine thermoplastique (TPO).

En accord avec une réalisation pratique non limitative du dispositif 1 selon l'invention, plus particulièrement adaptée à une construction du type toiture-terrasse, les différentes composantes du revêtement stratifié peuvent se présenter comme suit :
- première couche 3 : membrane pare-vapeur, par exemple du type connu sous la désignation SOPRAVAP HYGRO par la société SOPREMA ;
- couche élémentaire inférieure 6 : panneaux "PAVATHERM-FORTE" de la société PAVATEX ;
- couche élémentaire supérieure 6' : panneaux de liège ou de perlite expansé(e), ou encore de laine de bois ;
- troisième couche 5 : membrane du type SOPRAFIX UNILAY AR ou FLAGON SR 15/10 de la société SOPREMA.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention comme définie par les revendications annexées.

## Revendications

1. Dispositif (1) de toiture-terrasse ou de toiture en pente, isolée thermiquement et à structure compacte, comprenant un support surfacique (2) constitué de panneaux à base de particules et/ou de copeaux de bois aggloméré(e)s, sur lequel sont disposées, successivement et de manière stratifiée, au moins une première couche (3) formant une barrière régulant le passage de la vapeur d'eau, au moins une seconde couche isolante (4) constituée au moins partiellement d'un matériau à base de fibres de bois et au moins une troisième couche (5) sensiblement imperméable à l'eau liquide,
la seconde couche isolante (4) étant une couche composite formée par la superposition de deux couches élémentaires homogènes distinctes (6 et 6'), à savoir, une couche élémentaire inférieure (6) en un matériau à base de fibres de bois, reposant sur la première couche (3), et une couche élémentaire supérieure (6'), sur laquelle repose la troisième couche (5),
la troisième couche (5) formant la couche supérieure et extérieure du dispositif (1), et consistant en une membrane d'étanchéité, soit bitumineuse, soit synthétique,
la couche élémentaire supérieure (6') étant formée d'un matériau au moins partiellement biosourcé, à propriétés hygroscopiques, antifongiques et d'isolation thermique, présentant une faible résistance à la diffusion de la vapeur d'eau
dispositif **caractérisé**
**en ce que** le matériau de la couche élémentaire supérieure (6') est choisi dans le groupe formé par le liège expansé, la perlite expansée et la laine de bois,
**en ce que** le ratio [couche élémentaire supérieure (6') / couche élémentaire inférieure (6)], en termes de rapport de leurs épaisseurs (E' / E) ou de leurs résistances thermiques (R' / R) respectives, est compris entre 0,25 et 0,6, et,
**en ce que** la première couche (3) consiste en une membrane formant une barrière à la vapeur hygrovariable.

2. Dispositif de toiture selon la revendication 1, **caractérisé en ce que** le rapport (R' / R) des résistances thermiques (R' et R) des couches élémentaires respectivement supérieure (6') et inférieure (6) est compris entre environ 1/3 et environ 1/2.

3. Dispositif de toiture selon l'une quelconque des revendications 1 et 2, **caractérisé en ce que** le rapport (E' / E) des épaisseurs (E' et E) des couches élémentaires respectivement supérieure (6') et inférieure (6) est compris entre environ 1/3 et environ 1/2, lorsque la couche élémentaire supérieure (6') est à base de liège expansé.

4. Dispositif de toiture selon l'une quelconque des revendications 1 à 3, **caractérisé en ce que** les couches élémentaires inférieure (6) et supérieure (6') sont formées chacune de panneaux de matériau correspondant.

5. Dispositif de toiture selon l'une quelconque des revendications 1 à 4, **caractérisé en ce que** la couche élémentaire inférieure (6) à base de fibres de bois présente une densité d'au moins 100 kg/m³, préférentiellement d'au moins 150 kg/m³, et une épaisseur d'au moins 60 mm, préférentiellement d'au moins 80 mm.

6. Dispositif de toiture selon l'une quelconque des revendications 1 à 5, **caractérisé en ce qu'**il comprend au moins une couche (7) d'isolation thermique additionnelle rapportée sous la face interne ou inférieure du support surfacique (2), opposée à sa face portant le revêtement stratifié formé par les première, deuxième et troisième couches (3, 4, 5), cette couche isolante additionnelle (7) présentant une résistance thermique sensiblement équivalente à la moitié de la résistance thermique de la seconde couche isolante composite (4) et étant préférentiellement constituée entièrement d'un matériau à base de fibres de bois.

7. Dispositif de toiture selon l'une quelconque des revendications 1 à 6, **caractérisé en ce que** la troisième couche (5) est une membrane d'étanchéité synthétique, en polychlorure de vinyle (PVC) ou en polyoléfine thermoplastique (TPO).

8. Dispositif de toiture-terrasse selon l'une quelconque des revendications 1 à 7, **caractérisé en ce qu'**il comprend une ossature bois (8) portant les panneaux formant le support surfacique (2).

## Patentansprüche

1. Flach- oder Satteldachbedachung (1), die thermisch isoliert und von kompakter Struktur ist, umfassend einen flächigen Träger (2), der aus Platten auf Basis von agglomerierten Spänen und/oder Holzhackschnitzeln ausgebildet ist, auf dem, aufeinanderfolgend und schichtartig, zumindest eine erste Schicht (3), die eine den Durchgang von Wasserdampf regulierende Schranke ausbildet, zumindest eine zweite isolierende Schicht (4), die zumindest teilweise aus einem Material auf Basis von Holzfasern ausgebildet ist, und zumindest eine dritte Schicht (5), die im Wesentlichen undurchlässig für flüssiges Wasser ist, angeordnet sind,
wobei die zweite isolierende Schicht (4) eine Verbundschicht ist, die durch das Übereinanderlegen von zwei verschiedenen homogenen Grundschichten (6 und 6') ausgebildet ist, und zwar einer unteren Grundschicht (6) aus einem Material auf Basis von Holzfasern, die auf der ersten Schicht (3) ruht, und einer oberen Grundschicht (6'), auf der die dritte Schicht (5) ruht,
wobei die dritte Schicht (5) die obere und äußere Schicht der Bedachung (1) ausbildet und aus einer entweder bituminösen oder synthetischen Dichtmembran ausgebildet ist,
wobei die obere Grundschicht (6') aus einem zumindest teilweise biobasierten Material mit hygroskopischen, antimykotischen und thermisch isolierenden Eigenschaften ausgebildet ist, das einen niedrigen Wasserdampfdiffusionswiderstand aufweist,
wobei die Bedachung **dadurch gekennzeichnet ist,**
**dass** das Material der oberen Grundschicht (6') aus der Gruppe ausgewählt ist, die sich aus expandiertem Kork, expandiertem Perlit und Holzwolle zusammensetzt,
**dass** das Verhältnis [obere Grundschicht (6') / untere Grundschicht (6)], ausgedrückt als Verhältnis ihrer jeweiligen Dicken (E' / E) oder thermischen Widerstände (R' / R), zwischen 0,25 und 0,6 liegt, und
**dass** die erste Schicht (3) aus einer Membran ausgebildet ist, die eine hygrovariable Dampfschranke ausbildet.

2. Bedachung nach Anspruch 1, **dadurch gekennzeichnet, dass** das Verhältnis (R' / R) der thermischen Widerstände (R' und R) der oberen (6') bzw. unteren (6) Grundschichten zwischen etwa 1/3 und etwa 1/2 liegt.

3. Bedachung nach einem der Ansprüche 1 und 2, **dadurch gekennzeichnet, dass** das Verhältnis (E' / E) der Dicken (E' und E) der oberen (6') bzw. unteren (6) Grundschichten zwischen etwa 1/3 und etwa 1/2 liegt, wenn die obere Grundschicht (6') auf Basis von expandiertem Kork vorliegt.

4. Bedachung nach einem der Ansprüche 1 bis 3, **dadurch gekennzeichnet, dass** die untere (6) und die obere (6') Grundschicht jeweils aus Platten aus entsprechendem Material ausgebildet sind.

5. Bedachung nach einem der Ansprüche 1 bis 4, **dadurch gekennzeichnet, dass** die untere Grundschicht (6) auf Basis von Holzfasern eine Dichte von mindestens 100 kg/m³, vorzugsweise mindestens 150 kg/m³, und eine Dicke von mindestens 60 mm, vorzugsweise mindestens 80 mm, aufweist.

6. Bedachung nach einem der Ansprüche 1 bis 5, **dadurch gekennzeichnet, dass** sie mindestens eine zusätzliche thermische Isolationsschicht (7) aufweist, die unter der Innen- oder Unterseite des flächigen Trägers (2) gegenüber seiner Fläche, die die geschichtete Abdeckung trägt, die aus der ersten, zweiten und dritten Schicht (3, 4, 5) ausgebildet ist, angebracht ist, wobei diese zusätzliche thermische Isolationsschicht (7) einen thermischen Widerstand aufweist, der im Wesentlichen der Hälfte des thermischen Widerstands der zweiten isolierenden Verbundschicht (4) entspricht und vorzugsweise vollständig aus einem Material auf Basis von Holzfasern ausgebildet ist.

7. Bedachung nach einem der Ansprüche 1 bis 6, **dadurch gekennzeichnet, dass** die dritte Schicht (5) eine synthetische Dichtmembran aus Polyvinylchlorid (PVC) oder thermoplastischem Polyolefin (TPO) ist.

8. Flachdachbedachung nach einem der Ansprüche 1 bis 7, **dadurch gekennzeichnet, dass** sie ein Holzskelett (8) umfasst, das die Platten trägt, die den flächigen Träger (2) ausbilden.

## Claims

1. Roof-terrace or pitched roof device (1), thermally insulated and with a compact structure, comprising a surface support (2) formed of panels based on agglomerated wood particles and/or shavings, on which are arranged, successively and in a laminated manner, at least one first layer (3) forming a barrier for regulating the passage of water vapour, at least one second insulating layer (4) formed at least partially by a wood fibre-based material and at least one third layer (5) which is substantially impermeable to liquid water,
the second insulating layer (4) being a composite layer formed by the superposition of two distinct homogeneous elementary layers (6 and 6'), namely a lower elementary layer (6) made from a material based on wood fibres, resting on the first layer (3), and an upper elementary layer (6') on which the third layer (5) rests,
the third layer (5) forming the upper and exterior layer of the device (1) and consisting of a sealing membrane, either a bituminous or synthetic membrane,
the upper elementary layer (6') being formed by a material which is at least partially biosourced, with hygroscopic, antifungal and thermal insulation properties, having a low resistance to the diffusion of water vapour,
the device being **characterised in that** the material of the upper elementary layer (6') is selected from a group formed by expanded cork, expanded perlite and wood wool,
**in that** the ratio [upper elementary layer (6') / lower elementary layer (6)], in terms of the ratio of their respective thicknesses (E' / E) or their thermal resistances (R' / R), is between 0.25 and 0.6, and
**in that** the first layer (3) consists of a membrane forming a barrier to hygrovariable vapour.

2. Roof device according to claim 1, **characterised in that** the ratio (R' / R) of thermal resistances (R' and R) of the upper (6') and lower (6) elementary layers respectively is between about 1/3 and about 1/2.

3. Roof device according to any of claims 1 and 2, **characterised in that** the ratio (E' / E) of thicknesses (E' and E) of the upper (6') and lower (6) elementary layers respectively is between about 1/3 and about 1/2, when the upper elementary layer (6') is based on expanded cork.

4. Roof device according to any of claims 1 to 3, **characterised in that** the lower (6) and upper (6') elementary layers are each formed from panels of corresponding material.

5. Roof device according to any of claims 1 to 4, **characterised in that** the lower elementary layer (6) based on wood fibres has a density of at least 100 kg/m³, preferably at least 150 kg/m³, and a thickness of at least 60 mm, preferably at least 80 mm.

6. Roof device according to any of claims 1 to 5, **characterised in that** it comprises at least one additional layer (7) of thermal insulation applied underneath the internal or lower face of the surface support (2), opposite its face supporting the laminated coating formed by the first, second and third layers (3, 4, 5), said additional insulating layer (7) having a thermal resistance which is essentially equivalent to half the thermal resistance of the second composite insulating layer (4) and being preferably made entirely from a wood fibre-based material.

7. Roof device according to any of claims 1 to 6, **characterised in that** the third layer (5) is a synthetic sealing membrane made of polyvinyl chloride (PVC) or thermoplastic polyolefin (TPO).

8. Roof-terrace device according to any of claims 1 to 7, **characterised in that** it comprises a wooden framework (8) supporting the panels forming the surface support (2).
